# EUROPEAN PATENT SPECIFICATION

(11) **EP 4 313 442 B1**
(45) Date of publication and mention of the grant of the patent: **24.06.2026**
(21) Application number: 22781940.6
(22) Date of filing: 26.03.2022
(51) Int. Cl.: B22C 7/02, B22C 9/04, B22C 9/08, B29C 64/30, B33Y 40/20, B29C 64/118, B33Y 10/00

(54) **PROCESS FOR EVAPORATIVE CASTING**
VERFAHREN DES VOLLFORMGIESSENS
PROCÉDÉ DE MOULAGE PAR ÉVAPORATION

(30) Priority: 29.03.2021 US 202163167238 P
(43) Date of publication of application: 07.02.2024
(73) Proprietor: Skuld LLC, London, OH 43140 (US); Debruin, Mark, London, OH 43140 (US)
(72) Inventor: JORDAN, Sarah Elizabeth, London, Ohio 43140 (US); DEBRUIN, Mark, London, Ohio 43140 (US)
(74) Representative: Schwarz & Partner Patentanwälte GmbH
(86) International application number: PCT/US2022/022071
(87) International publication number: WO 2022/212219

(56) References cited:
- CN-A- 107 774 913
- CN-A- 109 396 350
- CN-A- 110 216 242
- JP-A- 2011 148 002
- US-A- 4 711 287
- US-A- 4 966 220
- US-A1- 2017 297 086
- US-A1- 2017 297 086
- US-B2- 10 807 290

## Description

### CROSS-REFERENCE TO RELATED APPLICATIONS

This application claims priority from U.S. Provisional Patent Application No. 63/167,238, filed on March 29, 2021.

### BACKGROUND

It is more efficient to pour molten metal (i.e., casting) to form an integral finished part than welding or assembling multiple components together. The history of foundries dates back to the Bronze Age (3500 BC) and Iron Age (1200 BC), which are named after the predominant foundry technology of the era. At that time and until modern industrial times, there were only two types of casting: (1) greensand casting and (2) investment casting.

In greensand casting, the molds are made of a mixture of water, sand, and clay. The molds are made to form a hollow space into which molten metal is poured. The metal cools into a solid piece as a casting in the shape of the cavity in the sand. The mold is dumped out to get the casting, and the sand can be re-used. Tolerances in greensand casting are approximately +/- 1.01 mm per mm (0.040 in. per in.) so in most cases, significant machining may be required to get a finished part.

Investment casting, also called lost wax casting, is a much more precision process than greensand casting and maintains tolerances of +/- 0.076 mm per mm (0.003 in. per in.). Investment casting is still used for sculptures and jewelry. It is also used for casting precision parts, such as aircraft engine turbine blades. Investment casting starts by having a piece of wax in the desired shape. The wax can be made by machining, made in a mold, or even hand carved. Pieces are attached to an assembly that feeds the desired shape during pouring. The wax is dipped into a ceramic coating (called the investment) and is allowed to dry. The coating and drying steps are repeated seven to 12 times. Typically, there are 24 hours between each coating step. The coating is typically built up to 6.35 mm to 12.7 mm (0.25 to 0.50 in.) thick. The mold is heated to melt the wax, which is dumped out of the mold. This leaves behind a hollow cavity. Molten metal is poured into the mold. The metal is allowed to cool and solidify. Removing the investment casting mold is difficult. Typical methods include mechanical means such as hammers, shot/grit blasting, and waterjets. After the investment is removed, the part (casting) is cut off of the gating system. The process takes two weeks or more.

The disclosure US 2017/0297086 A1 teaches a process to obtain a casting having predetermined characteristics, using a polylactic acid form in the lost foam method. First, polylactic acid material is 3D-printed into a body to obtain an outer shell of a final casting form. Then, the final casting form is placed into a container, which is surrounded by sand. Finally, molten metal is applied into the container and the final casting form is evaporated to obtain the casting.

### SUMMARY

The scope of the present invention is defined by independent claim 1, and further embodiments of the invention are specified in dependent claims 2-13.

### BRIEF DESCRIPTION OF THE FIGURES

The accompanying figures, which are incorporated in and constitute a part of the specification, illustrate various example systems and methods and are used merely to illustrate various example aspects. In the figures, like elements bear like reference numerals.
**FIG. 1** illustrates an example of using 3D printing to print only a hollow shell 100 in 3D of a full-sized target part according to an algorithm.
**FIG. 2** illustrates an example of a pre-cast assembly **240** formed from a hardened coating of ceramic mold **204** over an entire exterior surface of the 3D printed hollow shell.
**FIG. 3** illustrates an example of pouring the selected cast material into a pre-cast assembly while the cast material is in a molten state.
FIG. 4 illustrates a cutaway view of a pre-cast assembly 440 buried in compacted sand or ceramic beads 414; molten cast material 416 is poured into an inlet to evaporate the material of the 3D hollow shell 100.
**FIG. 5** illustrates cooling to solidify a cast from the molten selected cast material.
**FIG. 6** illustrates an example of a target cast part **620** from the evaporative casting process.
**FIG. 7** illustrates an upright position of a pre-cast assembly **740** that is connected to an inlet of a conduit **710** into which molten selected cast material **716** is being poured.
**FIG. 8** illustrates an upright position of a bottom gate pre-cast assembly **840** that is connected to an inlet of a conduit into which molten selected cast material is being poured.
**FIG. 9** illustrates an upright position of a top gate pre-cast assembly **940** that is connected to an inlet of a conduit into which molten selected cast material is being poured.
**FIG. 10A** illustrates a cutaway view of a pre-cast assembly **1040** buried in compacted sand or ceramic beads **1014;** molten cast material **1016** is poured into an inlet to evaporate the material of a 3D hollow shell **1000.**
**FIG. 10B** illustrates a partial magnified view of pre-cast assembly **1040.**
**FIG. 11A** illustrates a bottom gate pre-cast assembly **1140** that is connected to an inlet of a conduit into which molten selected cast material may be poured.
**FIG. 11B** illustrates a partial magnified view of bottom gate pre-cast assembly **1140.**
**FIG. 12A** illustrates a bottom gate pre-cast assembly **1240** that is connected via glue **1238** to an inlet of a conduit into which molten selected cast material may be poured.
**FIG. 12B** illustrates a partial magnified view of bottom gate pre-cast assembly **1240.**
**FIG. 13A** illustrates a bottom gate pre-cast assembly **1340** that is connected to an inlet of a conduit into which molten selected cast material may be poured.
**FIG. 13B** illustrates a partial magnified view of bottom gate pre-cast assembly **1340.**
**FIG. 14** illustrates a comparison of a lost foam pre-cast assembly versus an additive manufacturing evaporative casting assembly.
**FIG. 15** illustrates a illustrates a bottom gate pre-cast cluster assembly **1540** that is connected to an inlet of a conduit into which molten selected cast material may be poured.
**FIG. 16A** illustrates a top gate pre-cast assembly **1640** that is connected to an inlet of a conduit into which molten selected cast material may be poured.
**FIG. 16B** illustrates a partial magnified view of top gate pre-cast assembly **1640.**
**FIG. 17** illustrates an example method **1760** for obtaining a cast part.

### DETAILED DESCRIPTION

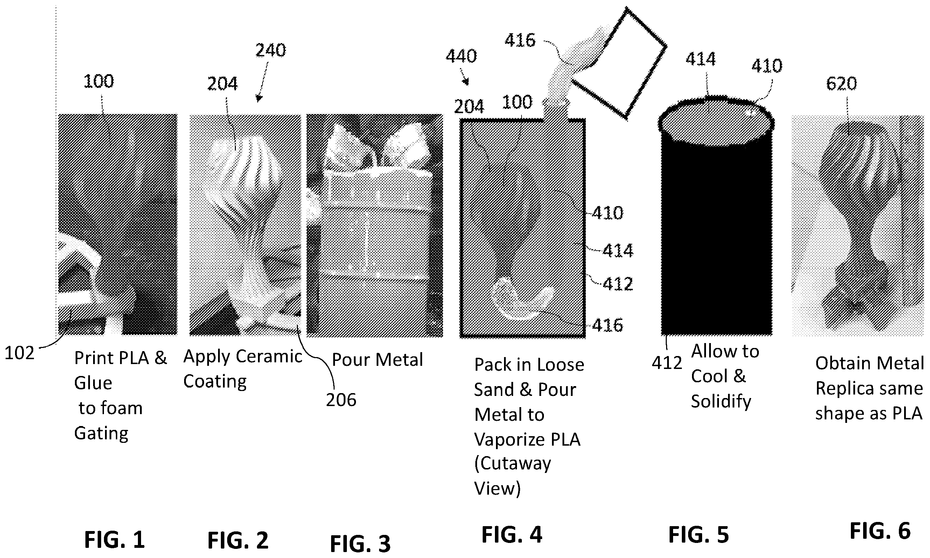

**FIG. 1** illustrates an example of using 3D printing to print only a hollow shell **100** in 3D of a full-sized target part according to an algorithm. Hollow shell **100** may be fixed to a foam gating member **102.** Hollow shell **100** may be fixed to foam gating member **102** via any of a variety of mechanisms, including for example a glue.

Hollow shell **100** may be used in an evaporative casting process, which involves the use of 3D printing to print only a hollow shell (e.g., hollow shell **100)** of a full-sized target part according to an algorithm. Hollow shell **100** may be formed from any of a variety of materials, including for example a polymer material such as polylactic acid (PLA) filaments.

The evaporative casting method may incorporate the benefits and capabilities of a 3D printer to print a casting mold prototype (target part) by printing only a hollow shell (e.g., hollow shell **100)** in 3D or only an envelope, instead of a solid version of a full-sized target part. Thus, both the amount of PLA materials used and the printing time of the 3D printing are substantially reduced. In addition, a reduction in the amount of PLA materials used to create the 3D hollow shell of the full-sized target part also substantially reduces the amount of PLA materials being burned off or evaporated, thus further reducing the risks of trapping gas bubbles within the solidified cast part. As described further below, gases trapped during evaporation of hollow shell **100** when pouring a molten material may result in forming voids, which are defects on the target part.

In an example, a 3D printed hollow shell **100** of full-sized target parts may achieve a part tolerance of up to +/- 0.051 mm (0.002 in.) and may achieve a surface finish of up to 0.0016 mm with 0.0051 mm - 0.0076 mm typical (64 microinch with 200-300 typical) root mean square (RMS). The 3D hollow shell may have a first range of wall thicknesses, which is either experimentally determined or mathematically modeled over one or a combination of parameters: for example, surface area pattern and size detail of the cast target part, polymer materials dispensing needle diameter, and physical properties of polymer materials.

In the present invention, hollow shell 100 includes a range of wall thicknesses of 0.15 mm (0.006 in.) to 1.00 mm (0.040 in.). Thicknesses below 0.15 mm may cause hollow shell **100** to lack structural integrity to prevent collapse under its own weight, or the weight of a ceramic coating. Thicknesses above 1.00 mm may result in too much gas being generated during evaporation of hollow shell **100,** resulting in defects and possibly explosions. Thicknesses of hollow shell **100,** or of specific portions of hollow shell **100,** may be selected based upon the minimum material thickness capable of providing hollow shell **100** with the structural integrity necessary to support its own weight and/or be coated with a ceramic. Once hollow shell **100** is printed, the volume of gas expected to be generated during the evaporation of hollow shell **100** may be calculated, and a plan may be developed regarding how to disperse that volume of gas.

**FIG. 2** illustrates an example of a pre-cast assembly **240** formed from a hardened coating of ceramic mold **204** over an entire exterior surface of 3D printed hollow shell (not shown, but illustrated in **FIG. 1** as hollow shell **100).** Pre-cast assembly **240** includes a hardened coating of ceramic mold **206** over a foam gating member (not shown, but illustrated in **FIG. 1** as foam gating member **102).**

In practice, a layer of ceramic coating may be applied over an entire exterior surface of the hollow shell **100,** forming a hardened ceramic mold **204,** wherein hardened ceramic mold **204** is fully enclosed and includes an opening at a lower end. As discussed further below, pre-cast assembly **240** may be formed by connecting the opening at the lower end of the hardened ceramic mold to an end of a conduit, while an opposite end of the conduit may be configured as an inlet to the pre-cast assembly.

In the present invention, ceramic mold 204 includes a range of wall thicknesses of 0.025 mm (0.001 in.) to 0.381 mm (0.015 in.). Thicknesses below 0.025 mm may cause ceramic mold **204** to crack during casting, resulting in a "burnt-on sand defect" in which a molten cast material escapes from ceramic mold **204** and contacts the surrounding sand, coating the sand in the molten cast material, which is very difficult to remove from the target cast part. Thicknesses above 0.381 mm may prevent the volume of gas generated during evaporation of hollow shell **100** from escaping through ceramic mold **204** fast enough, or at all. A build-up of the gas may lead to defects in the target cast part and/or explosions.

FIG. 3 illustrates an example of pouring the selected cast material into a pre-cast assembly while the cast material is in a molten state. FIG. 4 illustrates a cutaway view of a pre-cast assembly 440 buried in compacted sand or ceramic beads 414; molten cast material 416 is poured into an inlet of a conduit 410 to evaporate the material of the 3D hollow shell 100 and fill pre-cast assembly 440. Pre-cast assembly 440 may be contained within a container 412.

Pre-cast assembly 440 is disposed in an upright, bottom gate position, where the inlet of conduit 410 is bent in such a way to keep at an upright position. Selected cast material 416 in a molten state may flow by gravity down conduit 410 to evaporate the material of hollow shell 100 in a bottom portion, then continue to flow upward (due to a difference in height level of molten cast material 416) to evaporate the material of hollow shell 100 in the enclosed top portion until the entire volume inside the inner surface of pre-cast assembly **440** is filled with cast material **416,** without a void.

In another example, pre-cast assembly **440** may be disposed in an inverted, top gate position in which the top portion of pre-cast assembly **440** is facing downward and the bottom portion of pre-cast assembly **440** is facing upward, while conduit **410**'s inlet remains at an upright position to receive selected cast material **416** in a molten state. When disposed in the inverted position, selected cast material **416** in a molten state may flow downward by gravity to start evaporating the material of hollow shell **100** in the bottom portion of pre-cast assembly **440.** Cast material **416** may then continue to flow downward to evaporate the material of hollow shell **100** in the enclosed top portion (which is inverted to point downward) until the entire volume inside the inner surface of pre-cast assembly **440** is completely filled with cast material **416,** without a void.

The decision to bury pre-cast assembly **440** in an inverted position or in an upright position in compacted sand or ceramic beads **414** for pouring of molten cast material **416** may be dependent upon the density of molten cast material **416.** Yet alternately, pre-cast assembly **440** may be disposed at an angle (not shown) inside compacted sand or ceramic beads **414.**

**FIG. 5** illustrates cooling to solidify a cast from the molten selected cast material. **FIG. 6** illustrates an example of a target cast part **620** from the evaporative casting process. Cooling cast material **416** causes cast material **416** to solidify to yield the full-sized target part **620** in a cast from molten selected cast material **416.** Left over sand or ceramic beads **414,** and any ceramic coating **204,** may be removed to yield target cast part **620** from the evaporative casting.

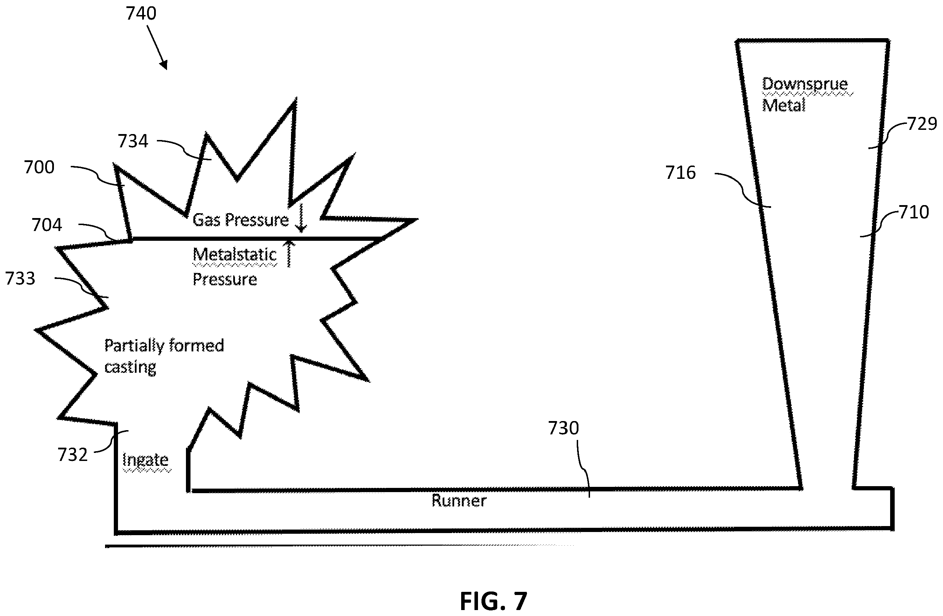

**FIG. 7** illustrates an upright position of a pre-cast assembly **740** that is connected to an inlet of a conduit **710** into which molten selected cast material **716** is being poured. Conduit **710** may include a downsprue **729,** a runner **730,** and an ingate **732.** Conduit **710,** to include downsprue **729,** runner **730,** and ingate **732,** provide a path (e.g., a tube, after coating with a ceramic mold) through which cast material **716** is ducted into an interior of a ceramic mold **704.** Ingate **732** is connected to ceramic mold **704** in a bottom gate configuration. Cast material **716** enters conduit **710,** and melts the foam substrate about which ceramic material is formed, allowing cast material **716** to flow through conduit **710** and into ceramic mold **704.**

While cast material **716** enters ceramic mold **704** and evaporates hollow shell **700,** the interior of ceramic mold **704** includes a cast portion **733** (making a partially formed casting) and an uncast portion **734.** The objective is of course to fill the entirety of the interior of ceramic mold **704** with cast material **716,** resulting in the elimination of uncast portion **734.** As hollow shell **700** evaporates, gases are generated. The gases escape to uncast portion **734,** where gas pressure builds. The gas pressure within uncast portion **734** encounters and acts against metal static pressure of cast material **716** within cast portion **733.** Gas within uncast portion **734** is able to escape through ceramic mold **704** as described further below.

As previously discussed, pre-cast assembly **740** may be buried in various positions including upright, inverted, and tilted at an angle. The selected position may be based on selected cast material **716** for casting, being at least one of: aluminum alloys, brass alloys, copper alloys, bronze alloys, iron alloys, steel, and stainless steel alloys. If a lower density of the selected cast material **716** is being used for casting, an inverted or a tilted angle burying position may be used. If a higher density of the selected cast material **716** is being used for casting, an upright or the tilted angle burying position may be used. However, it is understood that higher density cast materials **716** may be used in inverted positions, and lower density cast materials **716** may be used in upright positions.

It may be more desirable to utilize a bottom gate arrangement (e.g., those assemblies illustrated in **FIGS. 4****,** **7****,** and **9****-14)** as a bottom gate arrangement reduces turbulence and leads to more laminar flow of cast material **716** and less potential for defects in the final target part.

A top gate arrangement may be preferable when casting aluminum, magnesium, and/or beryllium cast materials **716** because those materials' densities are so low that the metal static pressure formed when casting those materials is at times not high enough to push the gas out of uncast portion **734.**

During casting, the head pressure (metal static pressure) of cast material **716** within cast portion **733** of ceramic mold **704** must be greater the gas pressure within uncast portion **734,** and additionally must be great enough to push the gas within uncast portion **734** out of the walls of ceramic mold **704.**

The head pressure of cast material **716** within cast portion **733** is a function: *f*(*P*) ∝ *g* * *H* * *V* * *ρ,* where P is the pressure, g is the gravity constant, H is the height of the column of cast material **716** above the ceramic mold **704**'s mold wall, V is the volume of the cast material **716** above the part, and ρ is the density of cast material **716** and used to calculate the mass being pulled down by gravity.

The gas pressure of the gas within uncast portion **734,** on the other hand, is dependent upon the mass of the polymer (of hollow shell 700) being vaporized, and the ideal gas law, and also varies with temperature. The ideal gas law is written in an empirical form as *P V = n R T.* To determine the gas pressure, one calculates the mass of polymer to vaporize (i.e., the mass of polymer used to form hollow shell **700)** and converts that mass to the number of moles of polymer. One next determines how much the polymer compounds will expand in transitioning from a solid to a gas and how much the polymer compounds will expand due to the temperature increase from room temperature to the molten metal temperature. These expansion calculations allow one to determine the expected gas pressure of gas within uncast portion **734.**

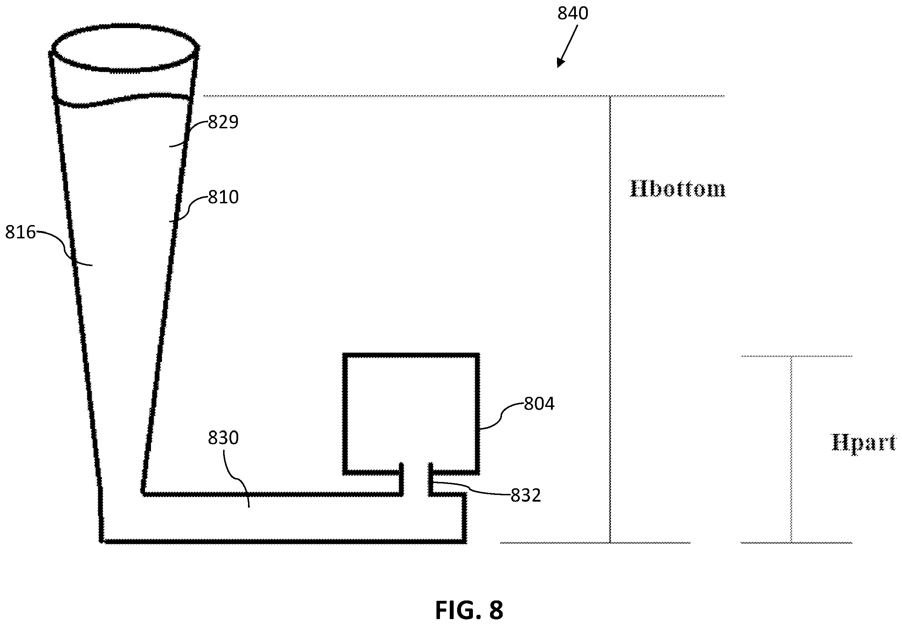

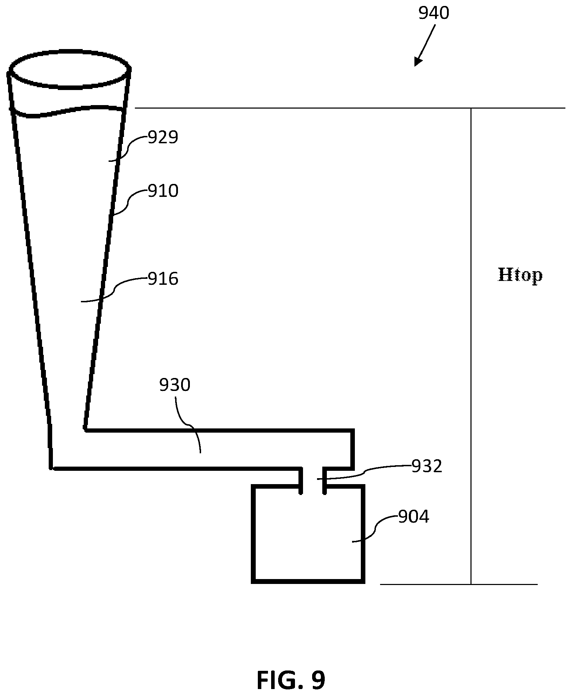

**FIG. 8** illustrates an upright position of a bottom gate pre-cast assembly **840** that is connected to an inlet of a conduit **810** into which molten selected cast material **816** is being poured. Conduit **810,** to include a downsprue **829,** a runner **830,** and an ingate **832,** provide a path (e.g., a tube, after coating with a ceramic mold) through which cast material **816** is ducted into an interior of a ceramic mold **804.** Cast material **816** enters conduit **810,** and melts the foam substrate about which ceramic material is formed, allowing cast material **816** to flow through conduit **810** and into ceramic mold **804.** **FIG. 9** illustrates an upright position of a top gate pre-cast assembly **940** that is connected to an inlet of a conduit **910** into which molten selected cast material **916** is being poured. Conduit **910,** to include a downsprue **929,** a runner **930,** and an ingate **932,** provide a path (e.g., a tube, after coating with a ceramic mold) through which cast material **916** is ducted into an interior of a ceramic mold **904.** Cast material **916** enters conduit **910,** and melts the foam substrate about which ceramic material is formed, allowing cast material **916** to flow through conduit **910** and into ceramic mold **904.** In a top gate pre-cast assembly, such as assembly **940,** more metal static (head) pressure is generated due to the greater distance that gravity as acting over the height **Htop.** In a bottom gate pre-cast assembly, such as assembly **840,** less assistance is obtained from gravity as the height **Hbottom** is less than height **Htop.** Additionally, in a bottom gate pre-cast assembly, such as assembly **840,** a negative pressure is generated, working against the positive metal static (head) pressure, due to the gravity acting over the height **Hpart** of the part.

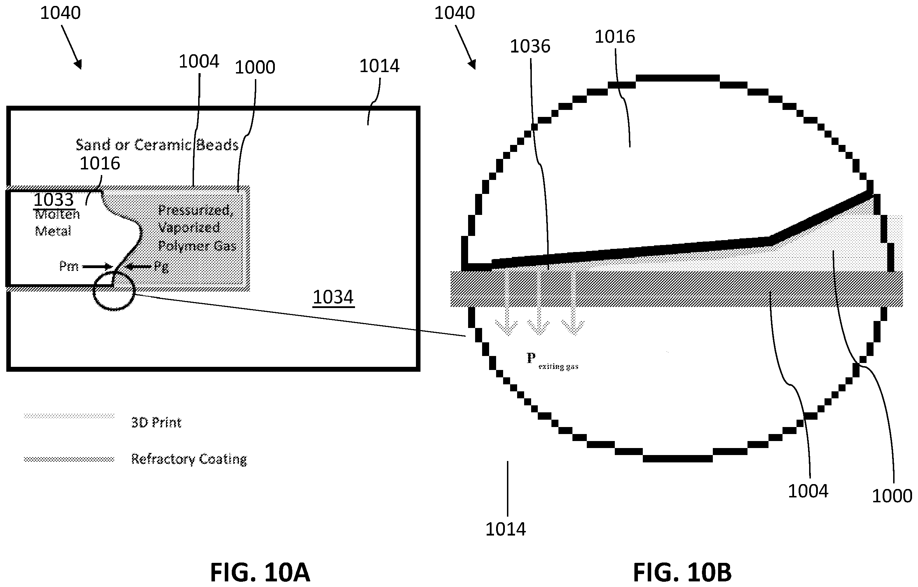

**FIG. 10A** illustrates a cutaway view of a pre-cast assembly **1040** buried in compacted sand or ceramic beads **1014;** molten cast material **1016** is poured into an inlet to evaporate the material of a 3D hollow shell **1000.** **FIG. 10B** illustrates a partial magnified view of pre-cast assembly **1040.** Pre-cast assembly **1040** includes a polymer hollow shell **1000,** coated in a ceramic to form a ceramic mold **1004.** Hollow shell **1000** and ceramic mold **1004,** bonded as one part, are buried in compacted sand or ceramic beads **1014,** and cast material **1016** is introduced to the interior of hollow shell **1000** and ceramic mold **1004.** Cast material **1016** has a temperature that is high enough to vaporize hollow shell **1000,** causing a temporary shell-free area **1036** to form at the junction of a cast portion **1033** with an uncast portion **1034.** Gas generated by vaporized hollow shell **1000,** as well as any gas previously contained within hollow shell **1000** and ceramic mold **1004** (e.g., ambient air), can escape through ceramic mold **1004** in shell-free area **1036.** It is understood that cast portion **1033,** uncast portion **1034,** and shell-free area **1036** is constantly changing as cast material **1016** is being added to the interior of ceramic mold **1004.**

With specific reference to **FIG. 10A****,** a metal static pressure **Pm** acts against a gas pressure **Pg.** Gas pressure **Pg** is pressurized, vaporized polymer gas. Metal static pressure **Pm** is hydrostatic pressure for the molten cast material **1016.** Consideration is given to the design of pre-cast assembly **1040**'s gating (i.e., top gate versus bottom gate) in light of pressure **Pm** and **Pg.**

If pressure **Pm** is less than pressure **Pg,** an explosion of molten metal **1033** is likely to occur. Molten Metal **1033** may be forcefully ejected back out of the conduit (including the downsprue) into which it was poured.

If pressure **Pm** is equal to pressure **Pg,** a defect is likely to occur as component only partially fills (that is, cast portion **1033** unable to overtake the entirety of uncast portion **1034).** The defect can occur at any point prior to solidification of the part after casting, or at any localized area in the part geometry.

Thus, pressure **Pm** must be greater than pressure **Pg** for a complete casting. Pressure **Pm** is calculated from the weight of the metal divided by the cross-sectional area. Pressure **Pg is** calculated using the following formula: **Pg = P vaporized print + P vaporized foam** - **P exiting gas.**

The pressure **P vaporized print** is the pressure of the vaporized gas generated by the vaporization of 3D printed hollow shell **1000.** The pressure **P vaporized foam** is the pressure of vaporized foam within ceramic mold **1004,** if any (applicable where lost foam casting is used as described herein). Pressure **P vaporized print** and pressure **P vaporized foam** are calculated using the Ideal Gas Law.

The pressure **P exiting gas** is the pressure of the vaporized polymer gas exiting assembly **1040** through ceramic mold **1004.** Pressure **P exiting gas** is a function of the surface area of the exposed ceramic mold **1004,** ceramic mold **1004'**s permeability, and vacuum pressure if a vacuum is used.

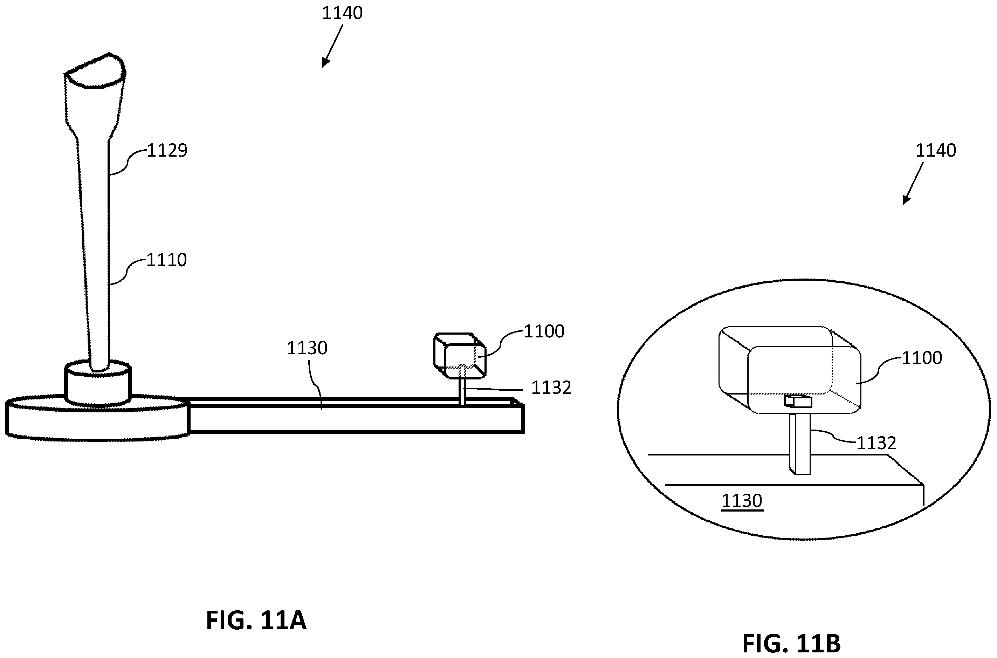

**FIG. 11A** illustrates a bottom gate pre-cast assembly **1140** that is connected to an inlet of a conduit **1110** into which molten selected cast material may be poured. **FIG. 11B** illustrates a partial magnified view of bottom gate pre-cast assembly **1140.** Conduit **1110,** to include a downsprue **1129,** a runner **1130,** and an ingate **1132,** provide a path (e.g., a tube, after coating with a ceramic mold) through which cast material is ducted into an interior of a ceramic mold formed around a hollow shell **1100.** Assembly **1140** is formed by connecting an opening at the lower end of a hardened ceramic mold (formed around hollow shell **1100)** to an end of conduit **1110** while an opposite end of conduit **1110** is configured as a cast material inlet to assembly **1140.**

In another embodiment, an additive manufacturing technique may be used in the casting method. The additive manufacturing technique combines: (1) the benefits of the 3D hollow shell printing for low cost and fast turnaround time for printing very detailed and difficult to machine structures, and (2) the benefits of lost foam casting technique. Lost foam casting may be used to consolidate many casting parts into one optimized integral structure with a tight tolerance of as high as 0.002", which may require no further machining after casting.

Lost foam casting foams may be produced by foam blowing or by machining. Because foams can be glued or compression fit together, highly complex shapes can be assembled together. For example, these highly complex shapes may include negative draft, channels, blind holes, interconnected castings, and a host of other ordinarily impossible shapes. In addition, it is possible to machine the foam for small volumes, which may be added or merged with a 3D printed hollow shell to create a merged casting mold for evaporative casting, where molten irons alloys, steels alloys, stainless steels alloys, aluminum alloys, brass alloys, bronze alloys, copper alloys, and more casting materials may be poured into the merged casting mold.

Evaporative casting on a merged casting mold may: (1) eliminate mold erosion for 3D sand prints, (2) eliminate size limitations of 3D prints, and (3) allow for use of a larger envelope (i.e., large size) without resorting to a more expensive 3D printer, which may also use more 3D printing materials and be more time consuming to print a larger 3D envelope or hollow shell. In addition, the use of the merged casting mold may help to eliminate oxide formation in a powder bed fusion process when aluminum is the selected casting material. Furthermore, the foam may be used as a gate frame to provide a platform or a substrate for casting the target part when being glued onto and or inserted into a 3D printed hollow shell.

An example of the merged casting mold is shown in **FIGS. 1, 2****,** **12A, 12B****,** and **15****.** The 3D hollow shell of the full-sized target parts may be attached (e.g., glued) onto a separate gate frame, wherein the gate frame may be either partly hollow or solid, and the gate frame may be separately manufactured from a different polymer material, such as Styrofoam, polystyrene or polymethyl methacrylate (PMMA), or a co-polymer of PMMA and polystryene. In one example, the gate frame of the different polymer material may be manufactured from foam blowing or machining.

In implementation, a merged casting mold may be formed by attaching the 3D printed hollow shell onto a separate gate frame manufactured from a different polymer material (e.g., Styrofoam). Depending upon the application and strength requirements, the gate frame may be manufactured as merely a partially hollow or entirely solid substrate for casting to increase the yield of multiple target parts. For example, the 3D printed hollow shell of the full-sized target parts may be glued down onto the separate gate frame to improve robustness and integrity of the pre-cast assembly for attaching to a separate conduit, which may be used for pouring of the molten selected cast material into the ceramic coated pre-cast assembly. The molten selected cast material may first burn off or evaporate the foam material in the gate frame (i.e., a bottom portion of the pre-cast assembly), then continue to burn off or evaporate the polymer materials (i.e., PLA) of the 3D printed hollow shell (i.e., a top portion of the pre-cast assembly).

After the evaporative casting using the merged casting mold, multiple target parts on the gate frame may be cut off, while the cast material of the gate frame may be salvaged or recycled for reuse in molten state.

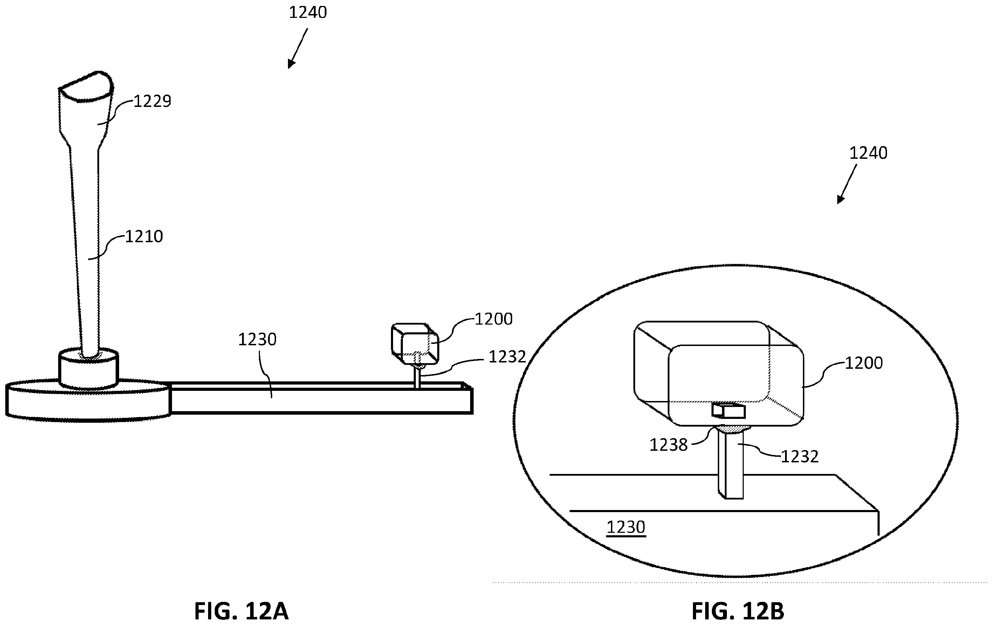

**FIG. 12A** illustrates a bottom gate pre-cast assembly **1240** that is connected via glue **1238** to an inlet of a conduit **1210** into which molten selected cast material may be poured. **FIG. 12B** illustrates a partial magnified view of bottom gate pre-cast assembly **1240.** Conduit **1210,** to include a downsprue **1229,** a runner **1230,** and an ingate **1232,** provide a path (e.g., a tube, after coating with a ceramic mold) through which cast material is ducted into an interior of a ceramic mold formed around a hollow shell **1200.** Assembly **1240** is an example of a merged casting mold, wherein a glue **1238** is used to secure a 3D printed hollow shell to ingate **1232,** both of which are then coated with ceramic to form ceramic mold (where the ceramic mold is formed around hollow shell **1200).**

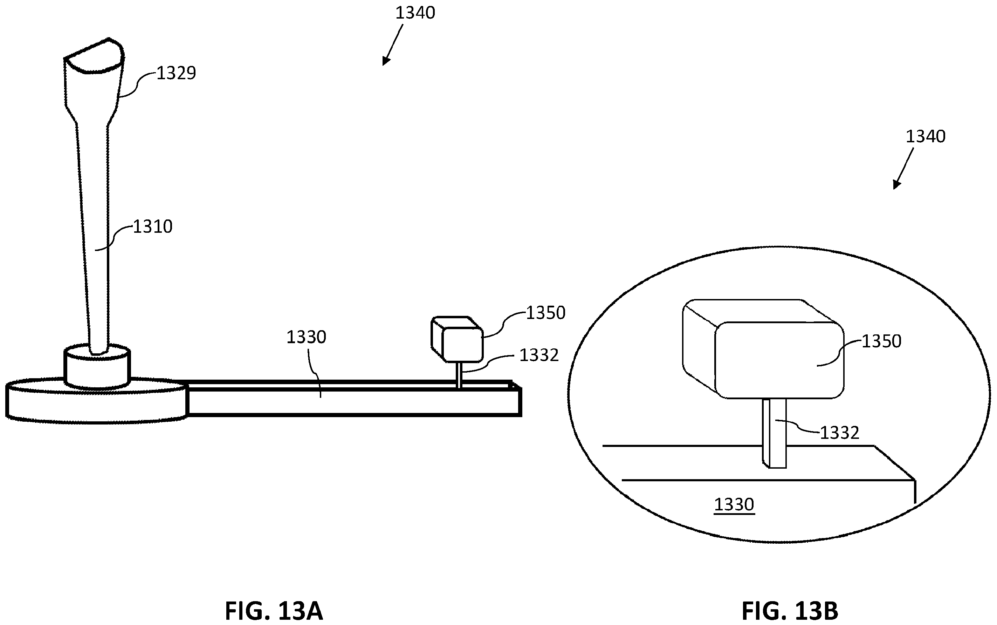

**FIG. 13A** illustrates a bottom gate pre-cast assembly **1340** that is connected to an inlet of a conduit **1310** into which molten selected cast material may be poured. **FIG. 13B** illustrates a partial magnified view of bottom gate pre-cast assembly **1340.** Conduit **1310,** to include a downsprue **1329,** a runner **1330,** and an ingate **1332,** provide a path (e.g., a tube, after coating with a ceramic mold) through which cast material is ducted into an interior of a ceramic mold formed around a solid foam element **1350.** Assembly **1340** is an example of a lost foam casting assembly, where a ceramic mold is formed around solid foam element **1350** rather than a 3D printed hollow shell. Solid foam element **1350** may be glued to ingate **1332,** which may also be formed of a foam.

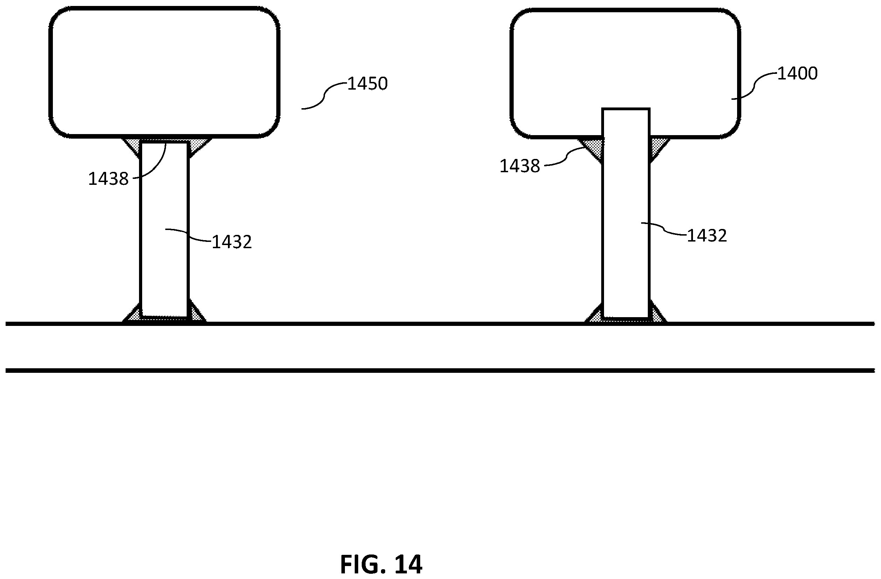

**FIG. 14** illustrates a comparison of a lost foam pre-cast assembly (left) versus an additive manufacturing evaporative casting assembly (right). The lost foam assembly includes a solid foam element **1450,** where the solid foam element is fixed via a glue **1438** at its surface to an end of an ingate **1432.** The additive manufacturing evaporative casting assembly includes a 3D printed hollow shell **1400** with a beveled opening in hollow shell **1400** through which an ingate **1432** extends. A glue **1438** is applied between ingate **1432** and hollow shell **1400** around the bevel. In each arrangement, a ceramic material is applied to coat the outside of solid foam element **1450,** hollow shell **1400** and the respective ingates **1432** to form a ceramic mold.

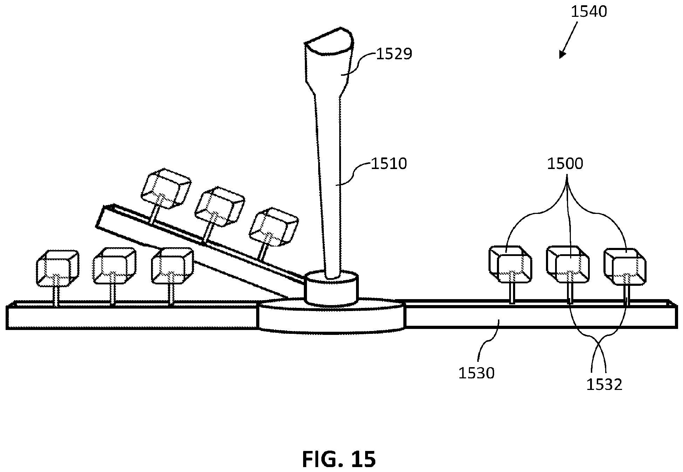

**FIG. 15** illustrates a illustrates a bottom gate pre-cast cluster assembly **1540** that is connected to an inlet of a conduit **1510** into which molten selected cast material may be poured. Conduit **1510,** to include a downsprue **1529,** at least one runner **1530,** and at least one ingate **1532,** provide a path (e.g., a tube, after coating with a ceramic mold) through which cast material is ducted into an interior of a ceramic mold formed around a hollow shell **1500.** Assembly **1540** is formed by connecting openings at the lower end of a hardened ceramic mold (formed around hollow shells **1500)** to an end of conduit **1510** while an opposite end of conduit **1510** is configured as a cast material inlet to assembly **1540.** In this manner, a plurality of cast parts may be cast simultaneously.

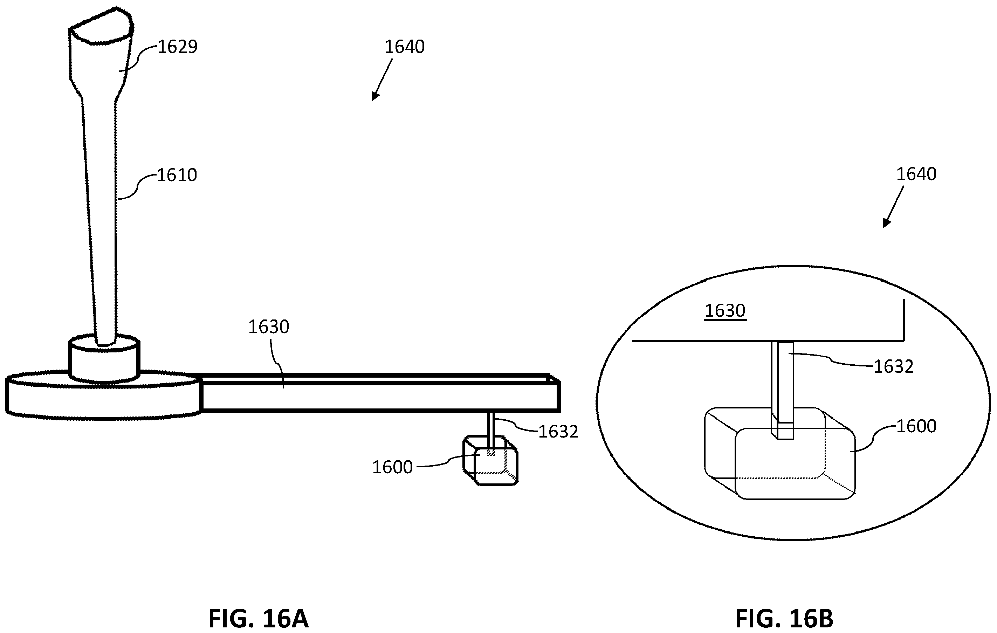

**FIG. 16A** illustrates a top gate pre-cast assembly **1640** that is connected to an inlet of a conduit **1610** into which molten selected cast material may be poured. **FIG. 16B** illustrates a partial magnified view of top gate pre-cast assembly **1640.** Conduit **1610,** to include a downsprue **1629,** a runner **1630,** and an ingate **1632,** provide a path (e.g., a tube, after coating with a ceramic mold) through which cast material is ducted into an interior of a ceramic mold formed around a hollow shell **1600.** Assembly **1640** is formed by connecting an opening at the lower end of a hardened ceramic mold (formed around hollow shell **1600)** to an end of conduit **1610** while an opposite end of conduit **1610** is configured as a cast material inlet to assembly **1640.**

As discussed above, a variety of factors lead to the successful casting of parts, without defects. The gating system (e.g., bottom gate versus top gate) is an important consideration to obtain a laminar flow of the cast material, and ensure that the pressure of the cast material within the ceramic mold is higher than the pressure of the vaporized polymer gas within the mold, so that the cast material pressure forces the vaporized polymer gas through the ceramic mold walls while the cast material remains hot enough to not solidify until casting is complete (e.g., the ceramic mold is filled and all uncast portions are eliminated). Additionally, using an olivine sand and/or ceramic beads to pack around the pre-cast assembly enables one to obtain precision tolerances and a desirable surface finish. Silica sand, on the other hand, may lead to undesirable surface finishes and poor tolerances (at least 10 times worse tolerances than those obtained using olivine sand and/or ceramic beads).

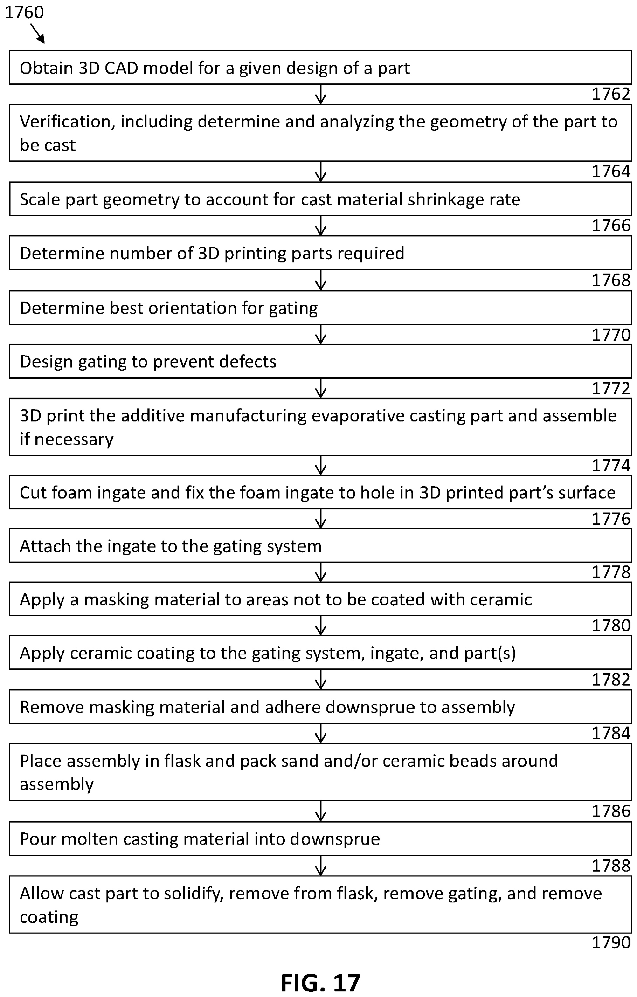

**FIG. 17** illustrates an example method **1760** for obtaining a cast part. Method **1760** begins with obtaining a 3D computer-aided design ("CAD") model for a given design of a part (step **1762).**

Next, method **1760** includes a verification process, including determining and analyzing the geometry of the part to be cast (step **1764).** The surface area of the part is determined and compared to the volume of the part. The ratio of the part surface area to the part volume should be greater than 3:1. If the ratio is less than 3:1, the casting material must be assessed to determine if the metal pour temperature can be increased without causing metallurgical defects or causing the metal to boil. If the ratio is less than 3:1, and if the metal pour temperature cannot be increased as noted, then the pre-cast assembly design is assessed to determine whether the metal static pressure can be increased. Finally, the location, orientation, and size of the ingate or ingates may be altered in a manner to provide cast material to problematic areas.

Next, method **1760** includes scaling the part geometry to account for the cast material shrinkage rate (step **1766).** The shrinkage rate is considered from the cast material's solidus temperature to room temperature. The solidus temperature is the highest temperature at which a cast material, such as an alloy, is completely solid (before turning to a liquid). For complicated geometries, simply scaling may not be sufficient, and the part's geometry may require modification so that the final cast part has the proper dimensions.

Next, method **1760** includes determining the number of 3D printed parts required to obtain the total hollow shell (step **1768).** Sometimes the hollow shell can be a single 3D printed part, and other times the hollow shell must be formed from multiple 3D printed parts assembled together. If the overhangs are more than about 38 mm (about 1.5 in.), then the 3D printing material (PLA) will likely sag. Thus, either supports must be added to the part, or the 3D printed part must be divided into multiple 3D printed parts. The CAD files to make the 3D printed parts are converted to STL command files, for directing the 3D printer. The volume of the print material is minimized by modifying the wall thickness and minimizing infill. The mass of the print material is determined.

Next, method **1760** includes determining the best orientation for gating (step 1770). This orientation focuses upon ensuring that the sand and/or ceramic beads are able to flow around the part once the pre-cast assembly is positioned within the flask. At least one hole is added to the 3D printed element's surface, either during the printing process (e.g., not printing in a certain area to create the hole) or afterward via machining or manual cutting of the hole. The hole(s) should be at least about 6.35 mm (0.25 in.) in diameter, but as large as the part allows for connection of the ingate(s).

Next, method **1760** includes designing the gating to prevent defects (step **1772).** This process is described in detail above with reference to **FIGS. 10A** and **10B****.** In summary, gating must be designed to ensure that the pressure **Pm** is greater than the pressure **Pg.**

Next, method **1760** includes 3D printing the additive manufacturing evaporative casting part and assemble the parts where necessary (e.g., where multiple 3D printed elements were required to form the whole 3D printed part) (step **1774).** Any support structure(s) and excess printing material is removed. Assembly of multiple 3D printed elements may include a compression fit, or fitting using an adhesive or polymer welding. Any adhesives used are kept at a minimum as the adhesives will produce gas when vaporized during casting.

Next, method **1760** includes cutting one or more foam ingate and fixing the foam ingate to the hole in the 3D printed part's surface (step **1776).** The foam ingate should be slightly larger than the hole in the 3D printed part's surface, so that it can be inserted into the hole and remain in place via a compression fit (as illustrated in pre-cast assemblies **1140, 1540,** and **1640).** Alternatively, the ingate can be glued in place (as illustrated in pre-cast assembly **1240).**

Next, method **1760** includes attaching the ingate to the gating system (step **1778).**

Next, method **1760** includes applying a masking material, such as masking tape, to areas not to be coated with ceramic (step **1780).** One example is the downsprue attachment point.

Next, method **1760** includes applying a ceramic coating to the gating system, ingate, and part(s) (step **1782).** The coating should be mixed and diluted pursuant to the coating manufacturer's specifications or until the desired coating viscosity has been reached. Coating may be applied by dipping the gating system, ingate, and part(s) into the coating, pouring the coating over the assembly, or painting the coating onto the assembly. The gating system, ingate, and part(s) must be covered completely with coating. The parts and ceramic coating are left to dry. The ceramic coating must be completely dry to avoid a risk of steam explosions during casting. Any cracked or missed coating areas may receive touch-up coating.

Next, method **1760** includes removing masking materials and adhering a downsprue to the assembly (step **1784).** The downsprue is the vertical funnel-like portion of the conduit. The downsprue may be a preformed ceramic item. The downsprue is adhered to the downsprue attachment point that was covered by a masking material during ceramic coating. The top (inlet) of the downsprue may be covered (e.g., with a paper cover) to prevent sand and/or ceramic beads from entering the top of the downsprue.

Next, method **1760** includes placing the assembly in a flask and packing sand and/or ceramic beads around the assembly (step **1786).** An initial base of at least 50.8 mm (2.0 in.) of sand and/or ceramic beads is provided in the bottom of the flask before placement of the pre-cast assembly inside of the flask. The ceramic beads may be ID40 ceramic beads. Beads between AFS Grain Fineness Number ("AFN") 20 and 80 may be used. Silica, olivine, or other types of natural or synthetic sands may be used. The sand and/or ceramic beads are vibrated into the flask around the pre-cast assembly until at least 254 mm (10 in.) of sand and/or ceramic beads cover the highest point of the ceramic mold, while the top of the downsprue extends above the level of the sand and/or ceramic beads.

Next, method **1760** includes pouring molten casting material into the top (inlet) of the downsprue (step **1788).** Any covering of the top (inlet) of the downsprue (e.g., the paper cover) is removed, or perforated, prior to pouring. The casting material is heated to a temperature at least 65.6 degrees C (150 degrees F) above the casting material's melting point. The casting metal is poured into the downsprue as fast as possible, with a target rate of about 45.4 kg (100 lbs.) per second. The pouring should be continuous (without interruption) to avoid defects.

Next, method **1760** includes allowing the cast part to solidify, removing the assembly from the flask, removing gating, and removing the ceramic coating (step **1790).** Solidification of the part typically takes at least one hour. The gating is removed by either knocking it off, or cutting it off. The ceramic coating may be removed by shotblasting, wire brush, rinsing, or the like.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available in manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10 % of the number. In other words, "about 10" may mean from 9 to 11.

## Claims

1. A method (1760) for evaporative casting, comprising:
using three-dimensional (3D) printing to print only a hollow shell (100, 700, 1000, 1100, 1200, 1400, 1500, 1600) in 3D of at least one full-sized target part (620) according to an algorithm (1774),
applying a layer of ceramic coating over an entire exterior surface of the 3D printed hollow shell (100, 700, 1000, 1100, 1200, 1400, 1500, 1600) forming a hardened ceramic mold (204, 704, 804, 904, 1004, 1782), wherein the hardened ceramic mold (204, 704, 804, 904, 1004) being fully enclosed and having an opening at a lower end;
forming a pre-cast assembly (240, 440, 740, 840, 940, 1040, 1140, 1240, 1340, 1540, 1640) by connecting the opening at the lower end of the hardened ceramic mold (204, 704, 804, 904, 1004) to an end of a conduit (410, 710, 810, 910, 1110, 1210, 1310, 1510, 1610, 1784), while an opposite end of the conduit (410, 710, 810, 910, 1110, 1210, 1310, 1510, 1610) is configured as an inlet to the pre-cast assembly (240, 440, 740, 840, 940, 1040, 1140, 1240, 1340, 1540, 1640);
burying completely the pre-cast assembly (240, 440, 740, 840, 940, 1040, 1140, 1240, 1340, 1540, 1640) under compacted sand or ceramic beads (414, 1014, 1786) wherein the inlet of the conduit (410, 710, 810, 910, 1110, 1210, 1310, 1510, 1610) is kept free and open at an upright position to receive a selected cast material (416, 716, 816, 916, 1016) in a molten state;
pouring the selected cast material (416, 716, 816, 916, 1016) in molten state into the inlet (1788) of the pre-cast assembly (240, 440, 740, 840, 940, 1040, 1140, 1240, 1340, 1540, 1640), wherein the selected cast material (416, 716, 816, 916, 1016) in a molten state travels down the conduit (410, 710, 810, 910, 1110, 1210, 1310, 1510, 1610) by gravity to entirely fill the pre-cast assembly (240, 440, 740, 840, 940, 1040, 1140, 1240, 1340, 1540, 1640) by evaporating all of the 3D printed hollow shell (100, 700, 1000, 1100, 1200, 1400, 1500, 1600), such that the selected cast material (416, 716, 816, 916, 1016) in a molten state completely fills up an entire volume enclosed by an inner surface of the hardened ceramic mold (204, 704, 804, 904, 1004);
cooling to solidify the selected cast material (416, 716, 816, 916, 1016) inside the pre-cast assembly (240, 440, 740, 840, 940, 1040, 1140, 1240, 1340, 1540, 1640) to yield a cast of the at least one full-sized target part (620, 1790);
wherein the 3D printed hollow shell (100, 700, 1000, 1100, 1200, 1400, 1500, 1600) comprises polymer materials having a wall thickness between 0.15 mm and 1.00 mm; and
wherein the hardened ceramic mold (204, 704, 804, 904, 1004) has a wall thickness between 0.025 mm and 0.381 mm.

2. The method of claim 1, wherein polymer materials including polylactic acid (PLA) based filaments are used in printing the 3D printed hollow shell (100, 700, 1000, 1100, 1200, 1400, 1500, 1600).

3. The method of claim 1, comprising attaching the 3D printed hollow shell (100, 700, 1000, 1100, 1200, 1400, 1500, 1600) of the at least one target part (620, 1790) onto a separate gate frame (1776, 1778), wherein the gate frame (102) is either partly hollow or solid and is separately manufactured from a foam material.

4. The method of claim 3, wherein the attaching of the 3D printed hollow shell (100, 700, 1000, 1100, 1200, 1400, 1500, 1600) of the at least one target part (620, 1790) onto the separately manufactured gate frame (102, 1776, 1778) comprises adhering the 3D printed hollow shell to the gate frame (102) with a glue (1238, 1438).

5. The method of claim 3, wherein the attaching of the 3D printed hollow shell (100, 700, 1000, 1100, 1200, 1400, 1500, 1600) of the at least one target part (620, 1790) onto the separately manufactured gate frame (102, 1776, 1778) comprises compression fitting a hole in the 3D printed hollow shell (100, 700, 1000, 1100, 1200, 1400, 1500, 1600) to the gate frame (102, 1776, 1778).

6. The method of claims 4 or 5, wherein a foam ingate (732, 832, 932, 1132, 1232, 1332, 1432, 1532, 1632) is fixed between the 3D printed hollow shell (100, 700, 1000, 1100, 1200, 1400, 1500, 1600) and the gate frame (102, 1778).

7. The method of claim 6, wherein the foam ingate (732, 832, 932, 1132, 1232, 1332, 1432, 1532, 1632) is adhered to the gate frame (102, 1776, 1778) at a first end, and fixed to the 3D printed hollow shell (100, 700, 1000, 1100, 1200, 1400, 1500, 1600) at a second end.

8. The method of claim 1, wherein the selected cast material (416, 716, 816, 916, 1016) comprises: aluminum alloys, brass alloys, copper alloys, bronze alloys, iron alloys, steel alloys, stainless steel, or a combination thereof.

9. The method of claim 1, wherein the pre-cast assembly (240, 440, 740, 840, 940, 1040, 1140, 1240, 1340, 1540, 1640) is buried in positions comprising one of: upright, inverted, and tilted at an angle.

10. The method of claim 9, wherein an inverted, a tilted angle, or an upright buried position is selected dependent upon a density of the selected cast material (416, 716, 816, 916, 1016) used.

11. The method of claim 1, wherein the evaporated 3D printed hollow shell (100, 700, 1000, 1100, 1200, 1400, 1500, 1600) creates a gas within the hardened ceramic mold (204, 704, 804, 904, 1004), the gas having a gas pressure (Pg), wherein the molten cast material includes a metal static pressure (Pm), and wherein the metal static pressure (Pm) is greater than the gas pressure (Pg).

12. The method of claim 11, wherein the gas within the hardened ceramic mold (204, 704, 804, 904, 1004) escapes from the hardened ceramic mold (204, 704, 804, 904, 1004) through a wall of the hardened ceramic mold (204, 704, 804, 904, 1004).

13. The method of claim 11, wherein the molten cast material (416, 716, 816, 916, 1016) evaporates the 3D printed hollow shell (100, 700, 1000, 1100, 1200, 1400, 1500, 1600) as the molten cast material (416, 716, 816, 916, 1016) comes close to the 3D printed hollow shell (100, 700, 1000, 1100, 1200, 1400, 1500, 1600), creating a temporary shell-free area (1036) between the molten cast material (416, 716, 816, 916, 1016) and the 3D printed hollow shell (100, 700, 1000, 1100, 1200, 1400, 1500, 1600).

## Patentansprüche

1. Verfahren (1760) zum Verdampfungsgießen, umfassend:
Verwendung des dreidimensionalen (3D-)Drucks, um gemäß einem Algorithmus (1774) nur eine Hohlschale (100, 700, 1000, 1100, 1200, 1400, 1500, 1600) in 3D von mindestens einem Zielteil (620) in Originalgröße zu drucken,
Aufbringen einer Schicht aus Keramikbeschichtung auf die gesamte Außenfläche der 3D-gedruckten Hohlschale (100, 700, 1000, 1100, 1200, 1400, 1500, 1600), wodurch eine gehärtete Keramikform (204, 704, 804, 904, 1004, 1782) ausgebildet wird, wobei die gehärtete Keramikform (204, 704, 804, 904, 1004) vollständig umschlossen ist und an einem unteren Ende eine Öffnung aufweist;
Bilden einer Fertigteilbaugruppe (240, 440, 740, 840, 940, 1040, 1140, 1240, 1340, 1540, 1640) durch Verbinden der Öffnung am unteren Ende der gehärteten Keramikform (204, 704, 804, 904, 1004) mit einem Ende einer Leitung (410, 710, 810, 910, 1110, 1210, 1310, 1510, 1610, 1784), während ein gegenüberliegendes Ende der Leitung (410, 710, 810, 910, 1110, 1210, 1310, 1510, 1610) als Einlass zur Fertigteilbaugruppe (240, 440, 740, 840, 940, 1040, 1140, 1240, 1340, 1540, 1640) ausgebildet ist;
Vollständiges Vergraben der Fertigteilbaugruppe (240, 440, 740, 840, 940, 1040, 1140, 1240, 1340, 1540, 1640) unter verdichtetem Sand oder Keramikperlen (414, 1014, 1786) wobei der Einlass der Leitung (410, 710, 810, 910, 1110, 1210, 1310, 1510, 1610) in aufrechter Position frei und offen gehalten wird, um ein ausgewähltes Gussmaterial (416, 716, 816, 916, 1016) im geschmolzenen Zustand aufzunehmen;
Gießen des ausgewählten Gussmaterials (416, 716, 816, 916, 1016) im geschmolzenen Zustand in den Einlass (1788) der Fertigteilbaugruppe (240, 440, 740, 840, 940, 1040, 1140, 1240, 1340, 1540, 1640), wobei das ausgewählte Gussmaterial (416, 716, 816, 916, 1016) im geschmolzenen Zustand durch die Schwerkraft die Leitung (410, 710, 810, 910, 1110, 1210, 1310, 1510, 1610) hinunterfließt, um die Fertigteilbaugruppe (240, 440, 740, 840, 940, 1040, 1140, 1240, 1340, 1540, 1640) vollständig auszufüllen, indem die gesamte 3D-gedruckte Hohlschale (100, 700, 1000, 1100, 1200, 1400, 1500, 1600) verdampft wird, sodass das ausgewählte Gussmaterial (416, 716, 816, 916, 1016) in geschmolzenem Zustand das gesamte, von einer Innenfläche der ausgehärteten Keramikform (204, 704, 804, 904, 1004) umschlossene Volumen vollständig ausfüllt;
Abkühlen, um das ausgewählte Gussmaterial (416, 716, 816, 916, 1016) innerhalb der Fertigteilbaugruppe (240, 440, 740, 840, 940, 1040, 1140, 1240, 1340, 1540, 1640) zu verfestigen, um einen Guss des mindestens einen Zielteils in Originalgröße (620, 1790) zu erhalten;
wobei die 3D-gedruckte Hohlschale (100, 700, 1000, 1100, 1200, 1400, 1500, 1600) Polymermaterialien mit einer Wandstärke zwischen 0,15 mm und 1,00 mm umfasst; und
wobei die gehärtete Keramikform (204, 704, 804, 904, 1004) eine Wandstärke zwischen 0,025 mm und 0,381 mm aufweist.

2. Verfahren nach Anspruch 1, wobei beim Drucken der 3D-gedruckten Hohlschale (100, 700, 1000, 1100, 1200, 1400, 1500, 1600) Polymermaterialien einschließlich Filamente auf Polymilchsäurebasis (PLA) verwendet werden.

3. Verfahren nach Anspruch 1, umfassend das Anbringen der 3D-gedruckten Hohlschale (100, 700, 1000, 1100, 1200, 1400, 1500, 1600) des mindestens einen Zielteils (620, 1790) an einem separaten Angussrahmen (1776, 1778), wobei der Angussrahmen (102) entweder teilweise hohl oder massiv ist und separat aus einem Schaumstoff hergestellt wird.

4. Verfahren nach Anspruch 3, wobei das Anbringen der 3D-gedruckten Hohlschale (100, 700, 1000, 1100, 1200, 1400, 1500, 1600) des mindestens einen Zielteils (620, 1790) an den separat hergestellten Angussrahmen (102, 1776, 1778) das Ankleben der 3D-gedruckten Hohlschale an den Angussrahmen (102) mit einem Klebstoff (1238, 1438) umfasst.

5. Verfahren nach Anspruch 3, wobei das Anbringen der 3D-gedruckten Hohlschale (100, 700, 1000, 1100, 1200, 1400, 1500, 1600) des mindestens einen Zielteils (620, 1790) an dem separat hergestellten Angussrahmen (102, 1776, 1778) das Einpressen einer Öffnung in der 3D-gedruckten Hohlschale (100, 700, 1000, 1100, 1200, 1400, 1500, 1600) in den Angussrahmen (102, 1776, 1778) umfasst.

6. Verfahren nach Anspruch 4 oder 5, wobei ein Schaumstoff-Anguss (732, 832, 932, 1132, 1232, 1332, 1432, 1532, 1632) zwischen der 3D-gedruckten Hohlschale (100, 700, 1000, 1100, 1200, 1400, 1500, 1600) und dem Angussrahmen (102, 1778) befestigt wird.

7. Verfahren nach Anspruch 6, wobei der Schaumstoff-Anguss (732, 832, 932, 1132, 1232, 1332, 1432, 1532, 1632) an einem ersten Ende am Angussrahmen (102, 1776, 1778) befestigt und an einem zweiten Ende an der 3D-gedruckten Hohlschale (100, 700, 1000, 1100, 1200, 1400, 1500, 1600) fixiert wird.

8. Verfahren nach Anspruch 1, wobei das ausgewählte Gussmaterial (416, 716, 816, 916, 1016) umfasst: Aluminiumlegierungen, Messinglegierungen, Kupferlegierungen, Bronzelegierungen, Eisenlegierungen, Stahllegierungen, Edelstahl oder eine Kombination davon.

9. Verfahren nach Anspruch 1, wobei die Fertigteilbaugruppe (240, 440, 740, 840, 940, 1040, 1140, 1240, 1340, 1540, 1640) in einer Position vergraben wird, die eine der folgenden umfasst: aufrecht, umgekehrt und in einem Winkel geneigt.

10. Verfahren nach Anspruch 9, wobei eine umgedrehte, eine geneigte oder eine aufrechte Vergrabungsposition in Abhängigkeit von der Dichte des verwendeten Gussmaterials (416, 716, 816, 916, 1016) ausgewählt wird.

11. Verfahren nach Anspruch 1, wobei die verdampfte 3D-gedruckte Hohlschale (100, 700, 1000, 1100, 1200, 1400, 1500, 1600) ein Gas innerhalb der ausgehärteten Keramikform (204, 704, 804, 904, 1004) erzeugt, wobei das Gas einen Gasdruck (Pg) aufweist, wobei das geschmolzene Gussmaterial einen statischen Metalldruck (Pm) aufweist, und wobei der statische Metalldruck (Pm) größer ist als der Gasdruck (Pg).

12. Verfahren nach Anspruch 11, wobei das Gas innerhalb der ausgehärteten Keramikform (204, 704, 804, 904, 1004) durch eine Wand der ausgehärteten Keramikform (204, 704, 804, 904, 1004) aus der ausgehärteten Keramikform (204, 704, 804, 904, 1004) entweicht.

13. Verfahren nach Anspruch 11, wobei das geschmolzene Gussmaterial (416, 716, 816, 916, 1016) die 3D-gedruckte Hohlschale (100, 700, 1000, 1100, 1200, 1400, 1500, 1600) verdampft, wenn sich das geschmolzene Gussmaterial (416, 716, 816, 916, 1016) der 3D-gedruckten Hohlschale (100, 700, 1000, 1100, 1200, 1400, 1500, 1600) nähert, wodurch ein vorübergehender schalenfreier Bereich (1036) zwischen dem geschmolzenen Gussmaterial (416, 716, 816, 916, 1016) und der 3D-gedruckten Hohlschale (100, 700, 1000, 1100, 1200, 1400, 1500, 1600) ausgebildet wird.

## Revendications

1. Procédé (1760) de moulage par évaporation, comprenant:
utiliser l'impression tridimensionnelle (3D) pour imprimer en 3D uniquement une coque creuse (100, 700, 1000, 1100, 1200, 1400, 1500, 1600) d'au moins une pièce cible (620) de taille réelle, selon un algorithme (1774);
appliquer une couche de revêtement céramique sur toute une surface extérieure de la coque creuse imprimée en 3D (100, 700, 1000, 1100, 1200, 1400, 1500, 1600) formant un moule en céramique durci (204, 704, 804, 904, 1004, 1782), le moule en céramique durci (204, 704, 804, 904, 1004) étant entièrement entouré et présentant une ouverture à une extrémité inférieure;
former un ensemble prémoulé (240, 440, 740, 840, 940, 1040, 1140, 1240, 1340, 1540, 1640) en reliant l'ouverture à l'extrémité inférieure du moule en céramique durci (204, 704, 804, 904, 1004) à une extrémité d'un conduit (410, 710, 810, 910, 1110, 1210, 1310, 1510, 1610, 1784), tandis qu'une extrémité opposée du conduit (410, 710, 810, 910, 1110, 1210, 1310, 1510, 1610) est configurée comme une entrée dans l'ensemble prémoulé (240, 440, 740, 840, 940, 1040, 1140, 1240, 1340, 1540, 1640);
enterrer complètement l'ensemble prémoulé (240, 440, 740, 840, 940, 1040, 1140, 1240, 1340, 1540, 1640) sous du sable compacté ou des billes de céramique (414, 1014, 1786), l'entrée du conduit (410, 710, 810, 910, 1110, 1210, 1310, 1510, 1610) étant maintenue libre et ouverte en position verticale pour recevoir un matériau de moulage sélectionné (416, 716, 816, 916, 1016) à l'état fondu;
couler le matériau de moulage sélectionné (416, 716, 816, 916, 1016) à l'état fondu dans l'entrée (1788) de l'ensemble prémoulé (240, 440, 740, 840, 940, 1040, 1140, 1240, 1340, 1540, 1640), le matériau de moulage sélectionné (416, 716, 816, 916, 1016) à l'état fondu se déplaçant par gravité vers le bas dans le conduit (410, 710, 810, 910, 1110, 1210, 1310, 1510, 1610) afin de remplir entièrement l'ensemble prémoulé (240, 440, 740, 840, 940, 1040, 1140, 1240, 1340, 1540, 1640) par évaporation de la coque creuse entière imprimée en 3D (100, 700, 1000, 1100, 1200, 1400, 1500, 1600), de sorte que le matériau de moulage sélectionné (416, 716, 816, 916, 1016) à l'état fondu remplisse entièrement un volume entier entouré par une surface intérieure du moule en céramique durci (204, 704, 804, 904, 1004);
refroidir pour solidifier le matériau de moulage sélectionné (416, 716, 816, 916, 1016) à l'intérieur de l'ensemble prémoulé (240, 440, 740, 840, 940, 1040, 1140, 1240, 1340, 1540, 1640) afin de produire une pièce moulée d'au moins une pièce cible de taille réelle (620, 1790);
la coque creuse imprimée en 3D (100, 700, 1000, 1100, 1200, 1400, 1500, 1600) comprenant des matériaux polymères dont l'épaisseur de paroi est comprise entre 0,15 mm et 1,00 mm; et
le moule en céramique durci (204, 704, 804, 904, 1004) ayant une épaisseur de paroi comprise entre 0,025 mm et 0,381 mm.

2. Procédé selon la revendication 1, dans lequel des matériaux polymères, y compris des filaments à base d'acide polylactique (PLA), sont utilisés dans l'impression de la coque creuse imprimée en 3D (100, 700, 1000, 1100, 1200, 1400, 1500, 1600).

3. Procédé selon la revendication 1, comprenant fixer la coque creuse imprimée en 3D (100, 700, 1000, 1100, 1200, 1400, 1500, 1600) d'au moins une pièce cible (620, 1790) sur un cadre de coulée séparé (1776, 1778), le cadre de coulée (102) étant soit partiellement creux, soit plein et étant fabriqué séparément à partir d'un matériau en mousse.

4. Procédé selon la revendication 3, dans lequel la fixation de la coque creuse imprimée en 3D (100, 700, 1000, 1100, 1200, 1400, 1500, 1600) d'au moins une pièce cible (620, 1790) sur le cadre de coulée fabriqué séparément (102, 1776, 1778) comprend adhérer la coque creuse imprimée en 3D au cadre de coulée (102) avec une colle (1238, 1438).

5. Procédé selon la revendication 3, dans lequel la fixation de la coque creuse imprimée en 3D (100, 700, 1000, 1100, 1200, 1400, 1500, 1600) d'au moins une pièce cible (620, 1790) sur le cadre de coulée fabriqué séparément (102, 1776, 1778) comprend le raccord à compression d'un trou dans la coque creuse imprimée en 3D (100, 700, 1000, 1100, 1200, 1400, 1500, 1600) au cadre de coulée (102, 1776, 1778).

6. Procédé selon la revendication 4 ou selon la revendication 5, dans lequel une amorce de coulée en mousse (732, 832, 932, 1132, 1232, 1332, 1432, 1532, 1632) est fixée entre la coque creuse imprimée en 3D (100, 700, 1000, 1100, 1200, 1400, 1500, 1600) et le cadre de coulée (102, 1778).

7. Procédé selon la revendication 6, dans lequel l'amorce de coulée en mousse (732, 832, 932, 1132, 1232, 1332, 1432, 1532, 1632) est collée au cadre de coulée (102, 1776, 1778) à une première extrémité et fixée à la coque creuse imprimée en 3D (100, 700, 1000, 1100, 1200, 1400, 1500, 1600) à une seconde extrémité.

8. Procédé selon la revendication 1, dans lequel le matériau de moulage sélectionné (416, 716, 816, 916, 1016) comprend: des alliages d'aluminium, des alliages de laiton, des alliages de cuivre, des alliages de bronze, des alliages de fer, des alliages d'acier, de l'acier inoxydable, ou une combinaison de ceux-ci.

9. Procédé selon la revendication 1, dans lequel l'ensemble prémoulé (240, 440, 740, 840, 940, 1040, 1140, 1240, 1340, 1540, 1640) est enterré dans des positions comprenant l'une des suivantes: verticale, inversée, et inclinée à un angle.

10. Procédé selon la revendication 9, dans lequel une position qui est inversée, à un angle incliné ou enterrée verticalement est sélectionnée en fonction d'une densité du matériau de moulage sélectionné (416, 716, 816, 916, 1016) qui est utilisé.

11. Procédé selon la revendication 1, dans lequel la coque creuse imprimée en 3D et évaporée (100, 700, 1000, 1100, 1200, 1400, 1500, 1600) crée un gaz à l'intérieur du moule en céramique durci (204, 704, 804, 904, 1004), le gaz présentant une pression de gaz (Pg), le matériau de moulage fondu incluant une pression métallostatique (Pm), et la pression métallostatique (Pm) étant supérieure à la pression de gaz (Pg).

12. Procédé selon la revendication 11, dans lequel le gaz à l'intérieur du moule en céramique durci (204, 704, 804, 904, 1004) s'échappe du moule en céramique durci (204, 704, 804, 904, 1004) à travers une paroi du moule en céramique durci (204, 704, 804, 904, 1004).

13. Procédé selon la revendication 11, dans lequel le matériau de moulage fondu (416, 716, 816, 916, 1016) fait évaporer la coque creuse imprimée en 3D (100, 700, 1000, 1100, 1200, 1400, 1500, 1600) lorsque le matériau de moulage fondu (416, 716, 816, 916, 1016) approche de la coque creuse imprimée en 3D (100, 700, 1000, 1100, 1200, 1400, 1500, 1600), créant ainsi une zone temporaire sans coque (1036) entre le matériau de moulage fondu (416, 716, 816, 916, 1016) et la coque creuse imprimée en 3D (100, 700, 1000, 1100, 1200, 1400, 1500, 1600).
